# EUROPEAN PATENT SPECIFICATION

(11) **EP 0 356 044 B1**
(45) Date of publication and mention of the grant of the patent: **08.12.1993**
(21) Application number: 89307900.4
(22) Date of filing: 03.08.1989
(51) Int. Cl.: G02F 1/133

(54) **Liquid crystal display device and method of producing the same**
Flüssigkristall-Anzeigevorrichtung und ihr Herstellungsverfahren
Dispositif d'affichage à cristal liquide et son procédé de fabrication

(30) Priority: 19.08.1988 JP 206901/88
(43) Date of publication of application: 28.02.1990
(73) Proprietor: SEIKO INSTRUMENTS INC., Tokyo 136 (JP)
(72) Inventor: Suginoya, Mitsuru c/o Seiko Instruments Inc., Koto-ku Tokyo (JP); Kamamori, Hitoshi c/o Seiko Instruments Inc., Koto-ku Tokyo (JP)
(74) Representative: Miller, Joseph

(56) References cited:
- EP-A- 0 113 237
- EP-A- 0 226 218
- EP-A- 0 238 174
- PATENT ABSTRACTS OF JAPAN, vol. 10, no. 149 (P-461)[2206], 30th May 1986; & JP-A-61 3124 (DAINIPPON INK.) 09-01-1986

## Description

The present invention relates to a liquid crystal optical device and although it is not so restricted, it relates more particularly to a multicolour liquid crystal display device having high durability and capable of being driven by a reduced driving voltage.

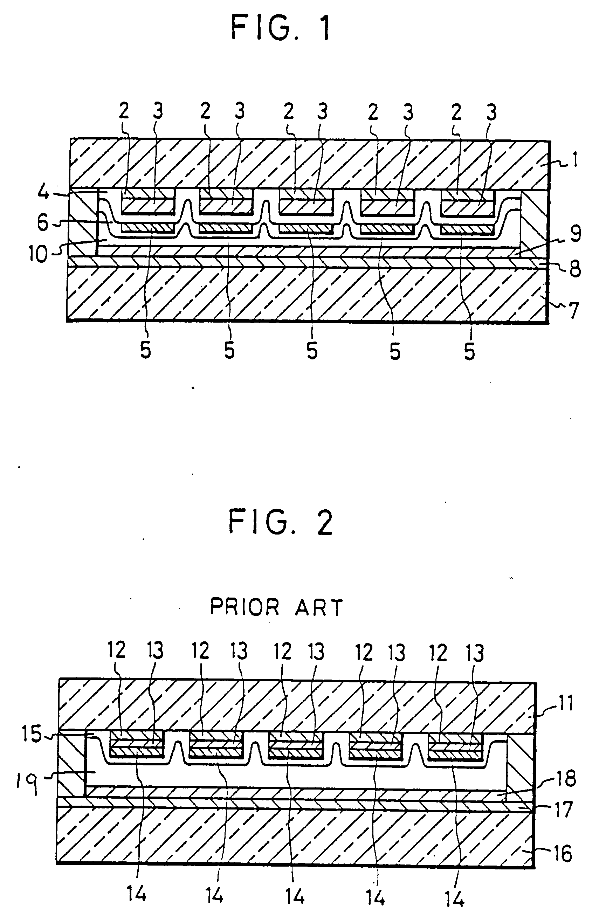

Figure 2 shows one example of a known multicolour liquid crystal display device utilizing electrodeposited colour filter members. In Figure 2, the device is shown as being comprised of a transparent substrate 11 made of glass; electrodes 12 made of transparent electroconductive film patterned in a desired shape; and colour filter members 13 formed on the electrodes 12 by electrodeposition of a composition including an electrodepositable polymer and a colouring material. Each of the colour filter members 13 is superposed in alignment with the corresponding electrode 12 and is coloured in a different colour or tone of colour. A method of making the colour filter members has been disclosed in JP-A-233933/1982, and provides an efficient way of conveniently producing colour filters having high resolution.

A transparent electroconductive or electrode film member 14 made of indium-tin-oxide (ITO) is formed on each colour filter member 13 and is arranged in alignment with the respective electrode 12. A first alignment layer 15 composed of polyimide is superposed on the electrode film members 14. A second transparent substrate 16 is formed with a second transparent electrode 17 on its inner surface, a second alignment layer 18 being mounted on the second transparent electrode 17. A liquid crystal layer 19 is disposed between the substrates 11 and 16 to constitute a liquid crystal cell.

The liquid crystal cell is applied with a driving voltage. When the liquid crystal cell is observed through a polarizer and an analyzer (not shown) which sandwich the cell therebetween, one part of the liquid crystal cell in its transparent stage has the colour of a said colour filter member and the other part thereof does not pass incident light and thus is coloured black. Consequently, the colour liquid crystal display device displays different colours when the liquid crystal cell is used as an optical shutter.

In such a multicolour liquid crystal display device, the transparent electroconductive film members 14 are used as driving electrodes and they are not covered with an insulating film such as a colour filter. Hence the colour filter members do not cause a voltage drop and therefore the driving voltage can be reduced.

However, the multicolour liquid crystal display device shown in Figure 2 has poor reliability or durability with respect to the strength of the boundary between the colour filter members 13 and the transparent driving electroconductive film members 14. If external stress is concentrated at the said boundary due, for example, to heat, it may cause problems such as the removal of the transparent driving electroconductive film members 14 and the generation of cracks. For example, a colour filter member 13 formed by electrodeposition of a polyester-melamine resin has a thermal expansion coefficient of the order of 10⁻⁴, and a transparent driving electroconductive film member 14 of ITO formed thereon has a thermal expansion coefficient of about 10⁻⁷. Such a difference in the degree of thermal deformation may cause a considerable amount of stress at the boundary of the colour filter members 13 and the ITO film members 14 due to an external factor such as temperature variation, which reduces the reliability of the device.

In US-A-4,779,957 there has been proposed another multicolour liquid crystal display device in which a colour filter is formed on a base electrode provided on a substrate, and is covered with a protective layer. An alignment layer is disposed on the protective layer so as to absorb the stress between the colour filter and the alignment layer by means of the interposed protective layer.

In EP-A-0,238,174 there is disclosed a liquid crystal display device comprising spaced apart first and second substrates; a driving electrode on the inner surface of the second substrate; a first alignment layer on the driving electrode; a plurality of first electrodes on the inner surface of the first substrate; a plurality of colour filter members each of which is disposed on a respective first electrode; a protective layer arranged so as to effect buffering of thermal stress disposed on and in contact with the colour filter members; and a second alignment layer disposed on the protective layer, the second and first alignment layers being spaced apart with a liquid crystal layer between them.

In Figure 2 of EP-A-0,113,237 there is disclosed a liquid crystal display device having a substrate on whose inner surface there are display electrodes each of which carries a colour filter member. Transparent electrodes may be provided on the colour filter members, these transparent electrodes serving to reduce the drive voltage required.

In Figure 3 of EP-A-0,226,218 there is disclosed a liquid crystal display device having a pair of substrates with a ferroelectric liquid crystal disposed between the substrates. At least one of the substrates has a colour filter layer thereon and a protection layer for preventing direct contact between the colour filter layer and the ferroelectric liquid crystal. The protection layer can be directly formed on the colour filter layer and transparent electrodes can be formed on the protection layer. This protection layer, however, is to prevent direct contact between the colour filter layer and the ferroelectric liquid crystal and there is no suggestion that it serves to effect buffering of thermal stress between any parts.

According to the present invention, there is provided a liquid crystal optical device comprising spaced apart first and second substrates; a driving electrode on the inner surface of the second substrate; a first alignment layer on the driving electrode; a plurality of first electrodes on the inner surface of the first substrate; a plurality of colour filter members each of which is disposed on a respective first electrode; a protective layer arranged so as to effect buffering of thermal stress disposed on and in contact with the colour filter members; and a second alignment layer disposed on the protective layer, the second and first alignment layers being spaced apart with a liquid crystal layer between them; characterised in that a plurality of second electrodes are interposed between the protective layer and the second alignment layer each inwardly of a respective colour filter member such that said buffering of thermal stress is effected between each colour filter member and its respective second electrode.

The protective layer may comprise epoxy material or may comprise polymeric material containing a silicon compound.

Each second electrode is preferably aligned with the respective coour filter member, although it may if desired extend parallel to the first and second substrates and substantially at right angles to the respective colour filter member.

The various colour filter members are preferably differently coloured.

The colour filter members are preferably electrodeposited onto the first electrodes, e.g. from a solution containing at least one dispersed electrodepositable polymer and colouring material.

The invention also includes a method of producing a liquid crystal optical device comprising forming spaced apart first and second substrates; forming a driving electrode on the inner surface of the second substrate; forming a first alignment layer on the driving electrode; forming a plurality of first electrodes on the inner surface of the first substrate; forming a plurality of colour filter members each of which is disposed on a respective first electrode; forming a protective layer arranged so as to effect buffering of thermal stress and disposed on and in contact with the colour filter members; and forming a second alignment layer which is disposed on the protective layer, the second and first alignment layers being spaced apart; and forming a liquid crystal layer between the alignment layers; characterised by forming a plurality of second electrodes interposed between the protective layer and the second alignment layer, each being disposed inwardly of a respective colour filter member such that said buffering of thermal stress is effected between each colour filter member and its respective second electrode.

The invention enables the reliability of the second electrodes on the colour filter members to be improved. The protective layer has a buffer effect and is arranged to adhere to both the colour filter members and the second electrodes so as to absorb the stress which would otherwise be applied to the boundary portion therebetween.

In a liquid crystal optical device according to the present invention, stress caused by heat etc. is distributed over both the boundary between the colour filter members and the protective film, and the boundary between the protective film and the second electrodes. The stress is therefore transmitted into the protective film, thereby avoiding a concentration of stress at a particular region. For example, deformation of the colour filter members is transmitted to the boundary of the second electrodes while being damped within the protective film. Therefore, the stress is substantially blocked from being transmitted to the most delicate transparent driving electroconductive film forming the second electrodes, thereby providing a multilayer structure containing a protective or buffer layer effective to achieve high reliability.

The invention is illustrated, merely by way of example, in the accompanying drawings, in which:-
Figure 1 is a sectional view of a multicolour display device according to the present invention; and
Figure 2 is a sectional view showing a known multicolour display device provided with electrodeposited colour filter members.

### Embodiment 1

In Figure 1 there is shown a multicolour liquid crystal display device according to the present invention which comprises a substrate 1 made of glass, a plurality of ITO base electrodes 2 formed on an inner surface of the substrate 1 and a plurality of colour filter film members 3 each of which comprises polyester-melamine resin and colouring material. The colours of the various colour filter members 3 are different from each other, e.g. are green, blue or red, and each of the colour filter members 3 is electrodeposited on the corresponding base ITO electrode 2. A protective film layer 4 is disposed over the plurality of colour filter members 3. A solution of epoxy-modified or epoxy group material containing acrylic resin JSS-16 (produced by NIPPON SYNTHETIC GUM) is coated on the colour filter members 3 and is cured at 200°C to form the protective layer 4. A plurality of transparent driving electrodes 5 are formed on the protective layer 4 by sputtering ITO material while maintaining the substrate at 200°C and by selective etching such that each driving electrode 5 is aligned with a corresponding colour filter member 3. At this stage, no coming away or cracking of the ITO driving electrodes 5 is observed. An alignment film 6 composed of polyimide resin is coated over the driving electrodes 5, the alignment film 6 being effective to align or orient liquid crystal molecules.

A counter-substrate 7 is prepared by forming thereon sequentially a transparent counter driving electrode 8 and another alignment film 9. The counter-substrate 7 is disposed in spaced relation to the substrate 1 to hold therebetween a liquid crystal layer 10 so as to constitute a multicolour liquid crystal display device. This multicolour liquid crystal display device maintains good display quality and high reliability after 1000 hours of driving at 80°C.

The transparent driving electrodes 5 may be disposed such that each driving electrode 5 is at a right angle to the colour filter members 3. In this case, a plurality of transparent counter driving electrodes 8 are disposed on the counter-substrate 7 such that each counter driving electrode 8 is aligned with a corresponding colour filter member 3.

### Embodiment 2

In this embodiment, a protective film 4 is formed by coating a coating liquid JHR-3034 (produced by NIPPON SYNTHETIC GUM) containing a silicone resin compound and by curing the coatings at 200°C., The same effect of buffering is obtained as in Embodiment 1.

### Comparison Example

A multicolour liquid crystal display device was prepared whose construction was the same as that of Figure 1 except that it did not incorproate a protective layer 4. In this case, the ITO driving electrodes 5 were formed directly on the colour filter members 3, with the result that removal and cracking of the ITO electrodes 5 occurred when the device was subjected to thermal stress.

In contrast, in the embodiment of Figure 1, the protective layer 4 is formed on the colour filter members 3, and the transparent electroconductive film members or driving electrodes 5 are superposed on the protective layer 4, the latter being effective to buffer the thermal deformation of the colour filter members 3 so as to reduce the concentration of thermal stress caused by use of the colour filters and thereby considerably improve the reliability or durability of the alignment layer 6 and of the driving electrodes 5 on the colour filter members 3. Moreover, the overall reliability of the display device is improved notwithstanding the use of the electrodeposited colour filter members 3 and notwithstanding the reduction of the driving voltage applied to the multicoolour display device.

## Claims

1. A liquid crystal optical device comprising spaced apart first and second substrates (1,7); a driving electrode (8) on the inner surface of the second substrate (7); a first alignment layer (9) on the driving electrode (8); a plurality of first electrodes (2) on the inner surface of the first substrate (1); a plurality of colour filter members (3) each of which is disposed on a respective first electrode (2); a protective layer (4) arranged so as to effect buffering of thermal stress disposed on and in contact with the colour filter members (3); and a second alignment layer (6) disposed on the protective layer (4), the second and first alignment layers (6,9) being spaced apart with a liquid crystal layer (10) between them; characterised in that a plurality of second electrodes (5) are interposed between the protective layer (4) and the second alignment layer (6) each inwardly of a respective colour filter member (3) such that said buffering of thermal stress is effected between each colour filter member (3) and its respective second electrode (5).

2. A liquid crystal optical device as claimed in claim 1 characterised in that the protective layer (4) comprises epoxy material.

3. A liquid crystal optical device as claimed in claim 1 characterised in that the protective layer (4) comprises polymer material containing a silicon compound.

4. A liquid crystal optical device as claimed in any preceding claim characterised in that each second electrode (5) is aligned with the respective colour filter member (3).

5. A liquid crystal optical device as claimed in any of claims 1-3 characterised in that each second electrode (5) extends parallel to the first and second substrates (1,7) and substantially at right angles to the respective colour filter member (3)

6. A liquid crystal optical device as claimed in any preceding claim characterised in that the various colour filter members (3) are differently coloured.

7. A method of producing a liquid crystal optical device comprising forming spaced apart first and second substrates (1,7); forming a driving electrode (8) on the inner surface of the second substrate (7); forming a first alignment layer (9) on the driving electrode (8); forming a plurality of first electrodes (2) on the inner surface of the first substrate (1); forming a plurality of colour filter members (3) each of which is disposed on a respective first electrode (2); forming a protective layer (4) arranged so as to effect buffering of thermal stress and disposed on and in contact with the colour filter members (3); and forming a second alignment layer (6) which is disposed on the protective layer (4), the second and first alignment layers (6,9) being spaced apart; and forming a liquid crystal layer (10) between the alignment layers (6,9); characterised by forming a plurality of second electrodes (5) interposed between the protective layer (4) and the second alignment layer (6), each being disposed inwardly of a respective colour filter member (3) such that said buffering of thermal stress is effected between each colour filter member (3) and its respective second electrode (5).

## Patentansprüche

1. Flüssigkristall-Optikanordnung mit einem ersten und zweiten voneinander beabstandeten Substrat (1, 7); einer Ansteuerelektrode (8) auf der Innenfläche des zweiten Substrats (7); einer ersten Ausrichtschicht (9) auf der Ansteuerelektrode (8); einer Vielzahl von ersten Elektroden (2) auf der Innenfläche des ersten Substrats (1); einer Vielzahl von Farbfilterelementen (3), die jeweils auf einer ersten Elektrode (2) angeordnet sind; einer auf den Farbfilterelementen (3) angeordneten und mit diesen in Kontakt stehenden Schutzschicht (4) zum Puffern von thermischer Spannung; und einer auf der Schutzschicht (4) angeordneten zweiten Ausrichtschicht (6), wobei die zweite und die erste Ausrichtschicht (6, 9) durch eine Flüssigkristallschicht (10) zwischen ihnen beabstandet sind; **dadurch gekennzeichnet**, daß zwischen der Schutzschicht (4) und der zweiten Ausrichtschicht (6) eine Vielzahl von zweiten Elektroden (5) jeweils auf der Innenseite eines Farbfilterelementes (3) derart angeordnet ist, daß die Pufferung von thermischer Spannung zwischen jedem Farbfilterelement (3) und seiner zugehörigen zweiten Elektrode (5) erfolgt.

2. Flüssigkristall-Optikanordnung nach Anspruch 1, **dadurch gekennzeichnet**, daß die Schutzschicht (4) ein Epoxid-Material umfaßt.

3. Flüssigkristall-Optikanordnung nach Anspruch 1, **dadurch gekennzeichnet**, daß die Schutzschicht (4) eine eine Siliziumverbindung enthaltendes Polymermaterial umfaßt.

4. Flüssigkristall-Optikanordnung nach den vorhergehenden Ansprüchen, **dadurch gekennzeichnet**, daß jede zweite Elektrode (5) zum jeweiligen Farbfilterelement (3) ausgerichtet ist.

5. Flüssigkristall-Optikanordnung nach den Ansprüchen 1 bis 3**, dadurch gekennzeichnet**, daß jede zweite Elektrode (5) parallel zum ersten und zweiten Substrat (1, 7) und im wesentlichen rechtwinklig zum jeweiligen Farbfilterelement (3) verläuft.

6. Flüssigkristall-Optikanordnung nach den vorhergehenden Ansprüchen, **dadurch gekennzeichnet**, daß die verschiedenene Farbfilterelemente (3) unterschiedlich gefärbt sind.

7. Verfahren zur Herstellung einer Flüssigkristall-Optikanordnung, bei dem ein erstes und zweites voneinander beabstandetes Substrat (1, 7); eine Ansteuerelektrode (8) auf der Innenfläche des zweiten Substrats (7); eine erste Ausrichtschicht (9) auf der Ansteuerelektrode (8); eine Vielzahl von ersten Elektroden (2) auf der Innenfläche des ersten Substrats (1); eine Vielzahl von auf einer jeweiligen ersten Elektrode (2) angeordneten Farbfilterelementen (3); eine auf den Farbfilterelementen (3) angeordnete und mit diesen in Kontakt stehende Schutzschicht (4) zur Pufferung von thermischer Spannung; und eine zweite auf der Schutzschicht (4) angeordnete Ausrichtschicht (6) gebildet werden, wobei die zweite und die erste Ausrichtschicht (6, 9) voneinander beabstandet sind, und zwischen den Ausrichtschichten (6, 9) eine Flüssigkristallschicht (10) gebildet wird, **dadurch gekennzeichnet**, daß eine vielzahl von zwischen der Schutzschicht (4) und der zweiten Ausrichtschicht (6) angeordneten zweiten Elektroden (5) gebildet wird, die jeweils derart auf einem Farbfilterelement (3) angeordnet sind, daß die Pufferung von thermischer Spannung zwischen jedem Farbfilterelement (3) und seiner jeweiligen zweiten Elektrode (5) erfolgt.

## Revendications

1. Dispositif à cristaux liquides comprenant un premier et un deuxième substrats (1, 7) espacés l'un de l'autre; une électrode d'excitation (8) sur la surface intérieure du deuxième substrat (7); une première couche d'alignement (9) sur l'électrode d'excitation (8); une série de premières électrodes (2) sur la surface intérieure du premier substrat (1); une série d'éléments de filtres couleur (3) qui sont disposés chacun sur une première électrode respective (2); une couche protectrice (4), agencée de façon à réaliser un effet de tampon de contrainte thermique, disposée sur les éléments de filtres couleur (3) et en contact avec eux; et une deuxième couche d'alignement (6) disposée sur la couche protectrice (4), la deuxième et la première couches (6, 9) d'alignement étant espacées l'une de l'autre en laissant entre elles une couche de cristaux liquides (10); caractérisé en ce qu'une série de deuxièmes électrodes (5) sont interposés entre la couche protectrice (4) et la deuxième couche d'alignement (6), chacune vers l'intérieur d'un élément respectif de filtre couleur (3), d'une manière telle que ledit effet de tampon de la contrainte thermique est réalisé entre chaque élément de filtre couleur (3) et sa deuxième électrode respective (5).

2. Dispositif optique à cristaux liquides selon la revendication 1 caractérisé en ce que la couche protectrice (4) comprend une matière époxy.

3. Dispositif optique à cristaux liquides selon la revendication 1 caractérisé en ce que la couche protectrice (4) comprend une matière polymère contenant un composé de silicium.

4. Dispositif optique à cristaux liquides selon une revendication précédente quelconque caractérisé en ce que chaque deuxième électrode (5) est alignée avec l'élément respectif de filtre couleur (3).

5. Dispositif optique à cristaux liquides selon l'une quelconque des revendications 1 à 3 caractérisé en ce que chaque deuxième électrode (5) s'étend en parallèle au premier et au deuxième substrats (1, 7) et sensiblement à angles droits avec l'élément respectif de filtre couleur (3).

6. Dispositif optique à cristaux liquides selon l'une quelconque des revendications précédentes caractérisé en ce que les divers éléments de filtres couleur (3) sont de couleurs différentes.

7. Procédé de production d'un dispositif optique à cristaux liquides comprenant les étapes consistant à: former un premier et un deuxième substrats (1, 7) espacés l'un de l'autre; former une électrode d'excitation (8) sur la surface intérieure du deuxième substrat (7); former une première couche d'alignement (9) sur l'électrode d'excitation (8); former une série de premières électrodes (2) sur la surface intérieure du premier substrat (1); former une série d'éléments de filtres couleur (3) disposés chacun sur une première électrode respective (2); former une couche protectrice (4) agencée de façon à réaliser un effet de tampon de contrainte thermique et disposée sur les éléments de filtres couleur (3) et en contact avec eux; et former une deuxième couche d'alignement (6) qui est disposée sur la couche protectrice (4), la deuxième et la première couches (6, 9) d'alignement étant espacées l'une de l'autre; et former une couche de cristaux liquides (10) entre les couches d'alignement (6, 9); caractérisé par la formation d'une série de deuxièmes électrodes (5) interposées entre la couche protectrice (4) et la deuxième couche d'alignement (6), chacune étant disposée vers l'intérieur d'un élément respectif de filtre couleur (3) d'une manière telle que ledit effet de contrainte thermique est réalisé entre chaque élément de filtre couleur (3) et sa deuxième électrode respective (5).
